# EUROPEAN PATENT APPLICATION

(11) **EP 2 431 091 A1**
(43) Date of publication of application: **21.03.2012**
(21) Application number: 10764211.8
(22) Date of filing: 24.03.2010
(51) Int. Cl.: B01J 19/24, B01F 5/00, F28D 7/10

(54) **TUBULAR FLOW TYPE REACTOR**

(30) Priority: 17.04.2009 JP 2009100663; 18.06.2009 JP 2009145377
(71) Applicant: Nisso Engineering Co., Ltd., Tokyo 101-0051 (JP)
(72) Inventor: KOBAYASHI, Eiichiro, Tokyo 101-0051 (JP); FUKUZAWA, Norihira, Tokyo 101-0051 (JP)
(74) Representative: Goulard, Sophie
(86) International application number: PCT/JP2010/002056
(87) International publication number: WO 2010/119624

(57) **Abstract**

A tubular flow type reactor comprising: (1) inflow channels for respective inflow of at least two kinds of fluids to be used in a reaction, (2) an outer tube having a lumen that is capable of merging the fluids and of distributing the merged fluids for the reaction, (3) an outflow channel for outflow of a reaction product from the outer tube, and (4) an inner tube disposed in the lumen of the outer tube, wherein an annular flow channel is formed between the outer tube and the inner tube, and the inflow channels are connected to the outer tube along the direction tangential to the internal circumference of the outer tube in such a manner that the lumens of the inflow channels communicate with the lumen of the outer tube, i.e., the annular flow channel.

## Description

### TECHNICAL FIELD

The present invention relates to a tubular flow type reactor or a chemical reaction process. More specifically, the present invention relates to a tubular flow type reactor or a chemical reaction process, where a contact area between reaction substrates just after confluence is increased and a reduction in yield of a reaction product due to concentration non-uniformity is prevented.

### BACKGROUND ART

Recently, as flow type reactors for reacting liquids such as reagents, for example, micrometer-sized or millimeter-sized reactors have been developed. One of micro reactors having simplest shapes is a T-shaped or Y-shaped reactor. Such a reactor has a plate provided with a T-shaped or Y-shaped groove having a depth of about 40 **µ**m and a width of about 100 **µ**m. The groove is closed with a tabular lid, and the reactor is connected to a tube. The plate serving as the lid is provided with a hole at each end of the T- or Y-shape, i.e., three holes in total. Two different reaction substrates are simultaneously charged to the reactor through the left and right ends of the upper portion of the T- or Y- shape, respectively, and are merged with each other at the center. The merged reaction substrates react with each other while flowing towards the lower portion to produce a reaction product, which is discharged from the lower end. When the flow rates of the reaction substrates are equal to each other, the reaction starts just at the base portion of the T- or Y-shape.

Since the inner diameter of the flow channel of the micro reactor is small, the Reynolds number is small to make the flow of a liquid laminar. In the laminar flow region, the convective flow in the tube diameter direction is small, and the charged two reaction substrates just after confluence are separated to the right and left of the approximately the center of the descending tube of the T- or Y-shape and tend to separately flow. The contact area of both fluids separately flowing is only the boundary surface. The both substrates are put into contact with each other by means of diffusion at this boundary surface. Unfortunately, the frequency that both substrates are put into contact with each other under such conditions is low, and the concentrations of the substrates tend to be non-uniform. In some cases, the both substrates reach the outlet of the reactor while maintaining the boundary surface. If the mixing is insufficient, for example, the reaction product may further react with the reaction substrate to produce a by-product, resulting in a reduction in yield. In the case that the flow rates of the two different reaction substrates are largely different from each other, for example, in the case of that a volume ratio of liquid A to liquid B is 1:10, the boundary surface between the two liquids is inclined to the liquid A side. Subsequently, the probability that liquid B is brought into contact with liquid A is very low, and a part of liquid B may reach the outlet of the reactor without contacting with liquid A. In particular, in the case of a reaction substrate having a high viscosity, such a phenomenon is notable.

As a method of enhancing the mixing just after the confluence of fluids, for example, Patent Literature 1 proposes a method in which an obstacle is disposed at the confluence point of a Y-shape flow channel. Unfortunately, in this method, insufficient mixing occurs, and the concentration non-uniformity may reduce the yield of a reaction product.

Patent Literature 2 discloses a micro reactor where a plurality of fluids passed through the respective fluid-feeding channels are merged and flow in one reaction flow channel while reacting with each other. The reaction flow channel is formed as a spiral-shaped flow channel by forming a spiral screw in either the external circumference surface of a round bar-like core member or the internal circumference surface having a circular cross-section of an external cylinder member and closely fitting the external circumference surface of the core member and the internal circumference surface of the external cylinder member. In this reactor, the structure of the spiral screw (static stirring method: static mixer) is complicated, and adhesion of scales and other substances easily occur. Accordingly, disassembling, cleaning, and re-assembling of the reactor take a lot of labor. In addition, a boundary surface is formed along the spiral-shaped flow channel in some cases, which prevents an increase in mixing efficiency.

Furthermore, Patent Literature 3 discloses a continuous mixing reactor including at least two feed tubes for raw material solutions, a cylindrical mixing reaction tube, and a discharge tube and causing a reaction by mixing at least two kinds of raw material solutions fed to the mixing reaction tube from the feed tubes for raw material solutions. The at least two feed tubes for raw material solutions are separately attached to the mixing reaction tube in such a manner that the at least two raw material solutions fed from the at least two feed tubes for raw material solutions form a swirl flow along an inner wall of the mixing reaction tube. The mixing reaction tube is coaxially connected to the discharge tube, and the agitation means is not included inside the mixing reaction tube. In this Patent Literature 3, the attachment of the feed tubes to the mixing reaction tube so as to form a swirl flow means that the feed tubes are disposed in the direction tangential to the mixing reaction tube. In the reactor of Patent Literature 3, stagnation occurs in the center of the swirl flow formed in the mixing reaction tube, and the concentration non-uniformity may cause a reduction in yield of the reaction product.

### CITATION LIST

### PATENT LITERATURE

Patent Literature 1: JP 2007-113433 A
Patent Literature 2: JP 2005-46652 A
Patent Literature 3: JP 2008-168168 A

### SUMMARY OF INVENTION

### TECHNICAL PROBLEM

It is an object of the present invention to provide a tubular flow type reactor or a chemical reaction process, where a contact area between reaction substrates just after confluence is increased and a reduction in yield of a reaction product due to concentration non-uniformity is prevented.

### SOLUTION TO PROBLEM

The present inventors have diligently investigated in order to achieve the above-mentioned object and, as a result, have found that the contact area between reaction substrates just after confluence can be increased and a reduction in yield of a reaction product due to concentration non-uniformity can be prevented by using a tubular flow type reactor having an outer tube and an inner tube disposed in the lumen of the outer tube, letting at least two kinds of fluids to be used in a reaction flow into the outer tube from the direction tangential to the internal circumference of the outer tube in such a manner that a flow swirling along the circumference of the outer tube is formed, allowing the inflow fluids to react while flowing in the longitudinal direction of the outer tube, and then discharging a reaction product through another end of the outer tube. The present invention has been completed by further conducting investigation based on this finding.

That is, the present invention includes the following aspects.
(1) A tubular flow type reactor comprising: inflow channels for respective inflow of at least two kinds of fluids to be used in a reaction, an outer tube having a lumen that has an annular cross-section and is capable of merging the fluids and of distributing the merged fluids for the reaction, and an outflow channel for outflow of a reaction product from the outer tube, wherein the inflow channels are connected to the outer tube along the direction tangential to the internal circumference of the outer tube in such a manner that the lumens of the inflow channels communicate with the lumen of the outer tube.
(2) A tubular flow type reactor comprising: inflow channels for respective inflow of at least two kinds of fluids to be used in a reaction, an outer tube having a lumen that is capable of merging the fluids and of allowing the merged fluids to flow for the reaction, an outflow channel for outflow of a reaction product from the outer tube, and an inner tube disposed in the lumen of the outer tube and partitioning the lumen of the outer tube into an annular shape, wherein the inflow channels are connected to the outer tube along the direction tangential to the internal circumference of the outer tube in such a manner that the lumens of the inflow channels communicate with the lumen of the outer tube.
(3) The tubular flow type reactor according to aspect (2), wherein a coolant or a heat medium can be distributed in the inner tube.
(4) The tubular flow type reactor according to any one of aspects (1) to (3), wherein the inflow channels are each connected to the outer tube so as to be almost orthogonal to the longitudinal direction of the outer tube.
(5) The tubular flow type reactor according to any one of aspects (1) to (4), wherein the inflow channels are connected to the outer tube so as to be different from each other in the positions in the longitudinal direction of the outer tube.

(6) A chemical reaction process using a tubular flow type reactor comprising an outer tube having a lumen having an annular cross-section, the process comprising a step of letting at least two kinds of fluids to be used in a reaction flow into the outer tube from the direction tangential to the internal circumference of the outer tube in such a manner that a swirl flow is formed in the lumen of the outer tube; a step of reacting the fluids flowing in the outer tube in the longitudinal direction; and a step of letting a reaction product obtained in the previous step flow out from the outer tube.
(7) A chemical reaction process using a tubular flow type reactor comprising an outer tube and an inner tube disposed in the lumen of the outer tube and partitioning the lumen of the outer tube into an annular shape, the process comprising a step of letting at least two kinds of fluids to be used in a reaction flow into the outer tube from the direction tangential to the internal circumference of the outer tube in such a manner that a flow swirling along the circumference of the outer tube is formed; a step of reacting the fluids flowing in the outer tube in the longitudinal direction; and a step of letting a reaction product obtained in the previous step flow out from the outer tube.
(8) The chemical reaction process according to aspect (7), the process further comprising a step of distributing a coolant or a heat medium in the inner tube to perform heat exchange with the fluid flowing in the outer tube.
(9) The chemical reaction process according to any one of aspects (6) to (8), wherein the at least two kinds of fluids to be used in a reaction flow into the outer tube at the one end of the outer tube in a direction almost orthogonal to the longitudinal direction of the outer tube.
(10) The chemical reaction process according to any one of aspects (6) to (9), wherein the inflow channels are connected to the outer tube so as to be different from each other in the positions in the longitudinal direction of the outer tube.

### ADVANTAGEOUS EFFECTS OF INVENTION

According to the tubular flow type reactor or the chemical reaction process, the contact area between reaction substrates just after confluence is increased, and a reduction in yield of a reaction product due to concentration non-uniformity is prevented. In the tubular flow type reactor of the present invention, swirling of inflow of at least two kinds of fluids can secure a sufficient contact area between reaction substrates just after confluence, even if there is a large difference in flow rates of the fluids. Consequently, concentration non-uniformity can be minimized.

### BRIEF DESCRIPTION OF DRAWINGS

Fig. 1 is a conceptual diagram illustrating an embodiment of the tubular flow type reactor of the present invention.
Fig. 2 includes conceptual diagrams illustrating aspects of positional relationships between inflow channels and an outer tube of the tubular flow type reactor of the present invention.
Fig. 3 is a conceptual diagram illustrating another embodiment of the tubular flow type reactor of the present invention.
Fig. 4 is a conceptual diagram illustrating an example of flow rate control when fluids alternately flow in.
Fig. 5 is a conceptual diagram illustrating a cross-section orthogonal to the longitudinal direction of the tubular flow type reactor of the present invention used in an example.
Fig. 6 is a conceptual diagram illustrating a cross-section parallel to the longitudinal direction of the tubular flow type reactor of the present invention used in the example.
Fig. 7 is a graph showing the mixing ability in an Ehrfeld method of the tubular flow type reactor of the present invention used in the example.

### DESCRIPTION OF EMBODIMENTS

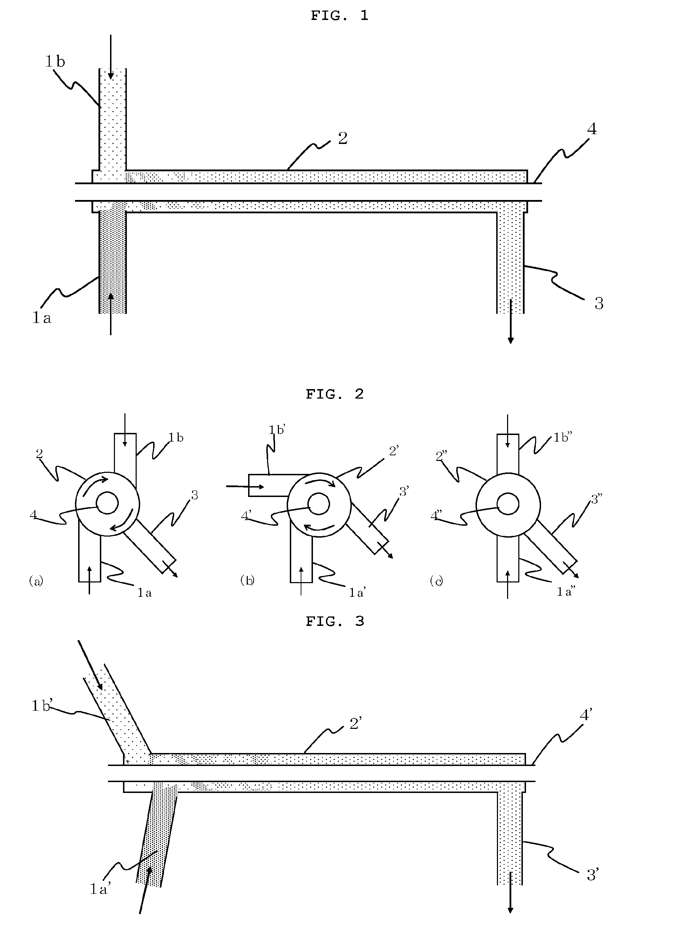

A tubular flow type reactor of the present invention will be described with reference to an embodiment shown in Fig. 1. Note that the present invention is not limited to the embodiment and includes changes, additions, and modifications within the spirit and the purpose of the present invention.

Fig. 1 is a conceptual diagram illustrating an embodiment of the tubular flow type reactor of the present invention. In Fig. 1, the concentration distribution when two kinds of fluids flow in a reactor of the present invention is conceptually shown by means of gradation. The reactor of the present invention shown in Fig. 1 is a duplex tube composed of an outer tube 2 and an inner tube 4. Though the reactor shown in Fig. 1 has a duplex tube structure, a triplex tube structure in which a tube is further disposed on the outer side of the outer tube 2 can be optionally employed. The outer tube in the embodiment shown in Fig. 1 is constituted of a straight tube, but is not limited thereto. For example, the outer tube may be a polygonal column that is perforated to form a lumen that allows fluids to flow or may be produced by forming a groove in a flat plate and lidding the groove to form a lumen that allows fluids to flow. The inner tube in the embodiment shown in Fig. 1 is constituted of a straight tube, but is not limited thereto. For example, the inner tube may be a cylinder solid not having a lumen. The point in the reactor of the present invention is that the lumen being capable of merging fluids and of distributing the merged fluids for a reaction has at least an annular cross-section. The reactor in the drawing is shown such that the outer tube and the inner tube are approximately coaxially arranged, but the reactor of the present invention is not limited thereto.

The sizes of the outer tube and the inner tube are not particularly limited. In the case of a micrometer-sized or millimeter-sized reactors, the average thickness of a gap between the internal surface of the outer tube and the external surface of the inner tube, that is, the average thickness of the annular lumen, is preferably 50 **µ**m to 2.5 mm and most preferably 50 **µ**m to 1 mm. Furthermore, from the viewpoint of capability of producing reactors using commercially available tubes, connectors and other components, the inner diameter of the outer tube is preferably 3 mm to 30 mm, and the outer diameter of the inner tube is preferably 1 mm to 25 mm.

The thicknesses and the materials of each tube can be appropriately selected from the viewpoints of, for example, strength, heat conductivity, corrosion resistance, and heat resistance. From the viewpoints of corrosion resistance and heat resistance, for example, tubes made of titanium metal, an alloy such as a titanium-based alloy, a nickel-based alloy (e.g., Hastelloy (registered trademark) and Inconel (registered trademark)), a cobalt-based alloy (e.g., Stellite (registered trademark)), or stainless steel, or an engineering plastic can be used. Usually, substances are prevented from moving between the lumen of the inner tube and the lumen of the outer tube. However, in order to use the reactor for, for example, dialysis in the biochemistry field, the inner tube may be constituted of a substance-permeable material for permitting movement of substances between the lumen of the inner tube and the lumen of the outer tube. Similarly, in a reactor having a triplex tube structure, the outer tube may be also constituted of a substance-permeable material for permitting movement of substances between the lumen of the outer tube and the lumen of the tube disposed on the outer side of the outer tube. In addition, heat exchange with the fluid flowing in the outer tube can be performed by distribution of a coolant or a heat medium in the inner tube or the tube disposed on the outer side of the outer tube.

At one end of the outer tube, inflow channels 1a and 1b, for letting at least two kinds of fluids to be used in a reaction flow in, are connected to the outer tube. The inflow channels are connected to the outer tube such that the lumens of the inflow channels communicate with the lumen of the outer tube. The at least two kinds of fluids flowing into the outer tube from the inflow channels are merged with each other in the lumen of the outer tube (the lumen in the vicinity of the inflow channel-connecting portions may be referred to as "confluence space"). The inflow channels may be each connected to the outer tube at any angle with respect to the inner tube, in other words, with respect to the longitudinal direction of the outer tube, but are preferably connected so as to be almost orthogonal. Note that in the present invention, the term "almost orthogonal" or "almost right angle" means 90 ± 45 degrees.

In the reactor shown in Fig. 1, the inflow channels are vertically symmetrical, but the positions where the inflow channels are connected to the outer tube may be different from each other in the longitudinal direction of the outer tube as shown in Fig. 3. In Fig. 3, an inflow channel 1b' is obliquely connected to the leftmost end of the outer tube, and an inflow channel 1a' is obliquely connected to the outer tube at a position slightly shifted towards the downstream side (right side) of the outer tube than the inflow channel 1b'. The number of the inflow channels is not limited to those shown in the drawings. Furthermore, more than one of the inflow channels may be joined to each other before they are connected to the outer tube.

In the tubular flow type reactor of the present invention, the inflow channels are connected to the outer tube along the direction tangential to the internal circumference of the outer tube. That is, the central axes of the inflow channels do not cross the central axis of the outer tube. Herein, the direction tangential to the internal circumference includes not only directions of tangents according to the exact meaning mathematically defined but also directions of substantial tangents realized in practical machining.

Fig. 2 includes conceptual diagrams of reactors each observed from the longitudinal direction of the outer tube. Fig. 2(a) shows an aspect in which the central axes of the inflow channels do not cross the central axis of the outer tube, that is, the connection of the inflow channels 1a and 1b are in the direction tangential to the internal circumference of the outer tube 2, and the connection of an outflow channel 3 is in a radial direction from the central axis of the outer tube 2. Fig. 2(b) shows an aspect in which the central axes of the inflow channels do not cross the central axis of the outer tube, that is, the connection of the inflow channels 1a' and 1b' (and the outflow channel 3') is in the direction tangential to the internal circumference of the outer tube 2' . As shown in Figs. 2(a) and 2(b), a flow swirling along the circumference of the annular space between the inner tube and the outer tube (e.g., the flow indicated by the clockwise arrows in Fig. 2) is formed by the connection of the inflow channels in the direction tangential to the internal circumference of the outer tube. Fig. 2(c) shows an aspect in which the central axes of the inflow channels cross the central axis of the outer tube, that is, the inflow channels 1a" and 1b" (and the outflow channel 3") are connected to the outer tube 2" in a radial direction from the central axis of the outer tube 2". That is, the connection of the inflow channels is not in the direction tangential to the internal circumference of the outer tube. Fluids flowing into the outer tube from the inflow channels collide with the inner tube at right angles to the inner tube.

The inner diameter of the inflow channel is not particularly limited, but is preferably 0.5 to 1.5 times the average thickness of the annular lumen.

The at least two kinds of fluids may continuously flow into or alternately flow into the confluence space. Examples of a device performing such flow rate control include plunger pumps, syringe pumps and the like. Total flow rate of fluids flowing in the outer tube is appropriately determined depending on chemical reaction rate, retention time, diameters and lengths of the tubes, and other factors.

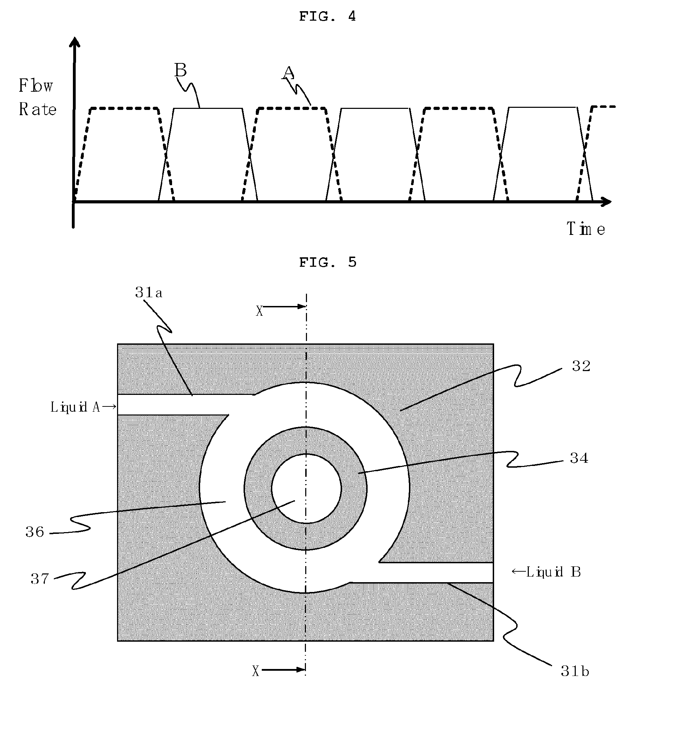

In the case of that at least two kinds of fluids continuously flow into the confluence space, the fluids probably flow towards the downstream end as multiple flows swirling along the circumference of the annular lumen. The fluids in the swirl flow state are mixed with each other by means of diffusion and convection, while flowing downward, are uniformized. In the case of that at least two kinds of fluids alternately flow into the confluence space, the fluids probably flow towards the downstream end in a plug flow state while swirling individually. For example, liquid A (broken line in Fig. 4) and liquid B (solid line in Fig. 4) can be intermittently sent out through the inflow channels 1a and 1b, respectively, by controlling flow rates as shown in Fig. 4. It is preferable to control the flow rates such that the sum of the flow rate of liquid A and the flow rate of liquid B during switching between liquid A and liquid B is constant to avoid fluctuation in total flow rate. Furthermore, for example, in the case of using three kinds of fluids, liquid A, liquid B, and liquid C, these liquid A, liquid B, and liquid C may be controlled to flow in one by one, repeatedly, or a combination of liquid A and liquid B, a combination of liquid B and liquid C, and a combination of liquid C and liquid A may be controlled to flow in one by one, repeatedly. The flow rate patterns are not limited thereto. In the case of alternate inflow, the switching intervals of inflow of at least two kinds of fluids can be appropriately selected depending on the volume of the outer tube and other factors. For example, the inflow of at least two kinds of fluids can be switched every several milliseconds to several seconds. Such alternate inflow of fluids greatly increases the interface area between the fluids and enhances uniform mixing of the fluids.

The flow rate of each fluid is not particularly limited. For example, the flow rates of fluids can be adjusted to be equal to each other. In the case of the same flow rates, for example, if the reaction substrates respectively contained in liquid A and liquid B react with equimolar value with each other, the concentrations of the reaction substrates respectively contained in liquid A and liquid B can be adjusted to be equal to each other. Furthermore, if reaction substrates react with each other at a molar ratio of 2:1, the concentrations of the reaction substrates respectively contained in liquid A and liquid B can be adjusted to be 2:1. These concentration ratios may be modified in consideration of, for example, reactivity of the reaction substrates , reverse reaction and the like.

The reactor of the present invention also can be applied to the case in which the inflow rates of fluids are largely different from each other, for example, such a case in which the volume ratio of liquid A to liquid B is 1:10. In the reactor of the present invention, a sufficient contact area between reaction substrates just after confluence can be secured by inflow of at least two kinds of fluids so as to swirl along the circumference of the annular lumen, even if there is a large difference in flow rate of the fluids. Consequently, concentration non-uniformity can be minimized.

While the merged fluids flow in the lumen of the outer tube in the longitudinal direction, the reaction substrates chemically react to give a product. In the reactor of this embodiment, the lumen of the outer tube is partitioned by the inner tube so as to have an annular cross-section. In an ordinary cylindrical tube (having a circular cross-section), fluids flow in a laminar flow state. Consequently, a large difference between the flow rate at the axial center of the tube and the flow rate in the vicinity of the tube wall occurs to give a flow rate distribution protruding in the longitudinal direction of the tube. In contrast, in the reactor of this embodiment, the cross-section has an annular shape. It is conceivable that the difference between the flow rate at the central portion of the annular space and the flow rate in the vicinity of the tube wall is small to maintain a flow similar to a theoretical plug flow state and that uniformization due to diffusion in such a state occurs. It is conjectured that due to this difference in flow rate distribution, in the reactor of the present invention, the contact area between reaction substrates just after confluence is increased and a reduction in yield of a reaction product due to concentration non-uniformity is prevented.

In the reactor of this embodiment shown in Fig. 1 or 3, the internal surface of the outer tube and the external surface of the inner tube are smooth without unevenness, but the internal surface of the outer tube and/or the external surface of the inner tube may be provided with unevenness. Examples of the unevenness include spiral grooves (or spiral ridges) along the direction of swirl flow, grooves (or ridges) along the direction disturbing swirl flow, such as baffle plates, and punctate protrusions and depressions.

The length of the outer tube in the reactor of the present invention can be appropriately selected depending on chemical reaction rate, flow rate, and other factors. In the case of performing a chemical reaction with a slow reaction rate, the length can be long. In contrast, in the case of a chemical reaction with a rapid reaction rate, the length of the tube can be short. The reaction temperature can be controlled by means of heat exchange between the fluids flowing in the outer tube and a coolant or a heat medium distributed in the inner tube (or optionally the tube disposed on the outer side of the outer tube).

The obtained reaction product is discharged through the outflow channel 3 connected to the outer tube at the other end. The outflow channel 3 may be further connected to, for example, another reactor (including a tubular flow type reactor of the present invention) or may be connected to an apparatus for purification. In Fig. 1, the connection of the outflow channel 3 is almost orthogonal to the inner tube 4, but is not limited thereto. The outflow channel 3 may be oblique with respect to the inner tube. In addition, as shown in Fig. 2, the connection of the outflow channel may be in a radial direction from the central axis of the outer tube (Fig. 2(a)) or may be in the direction tangential to the internal circumference of the outer tube (Fig. 2(b)). The number of the outflow channel is not limited to one. Two or more outflow channels may be provided, or the outflow channel may be branched on the downstream side thereof.

In the apparatus shown in Fig. 1, the inner tube is longer than the outer tube and protrudes from the both ends of the outer tube. However, the apparatus of the present invention is not limited to this configuration. For example, the right end of the inner tube may stay in the lumen of the outer tube so that the fluid distributed in the outer tube flows into the lumen of the inner tube from the opening at the right end and is then distributed towards the left end of the inner tube to flow out from the opening at the left end of the inner tube. In this case, the inner tube also serves as the outlet channel. In the flow of the fluid turned back, since the reaction is continued in the lumen of the inner tube, the total length of the reactor can be shortened.

### EXAMPLES

The present invention will be more specifically described hereinafter with reference to an example. However, the present invention is not restricted to the example.

### (Reactor)

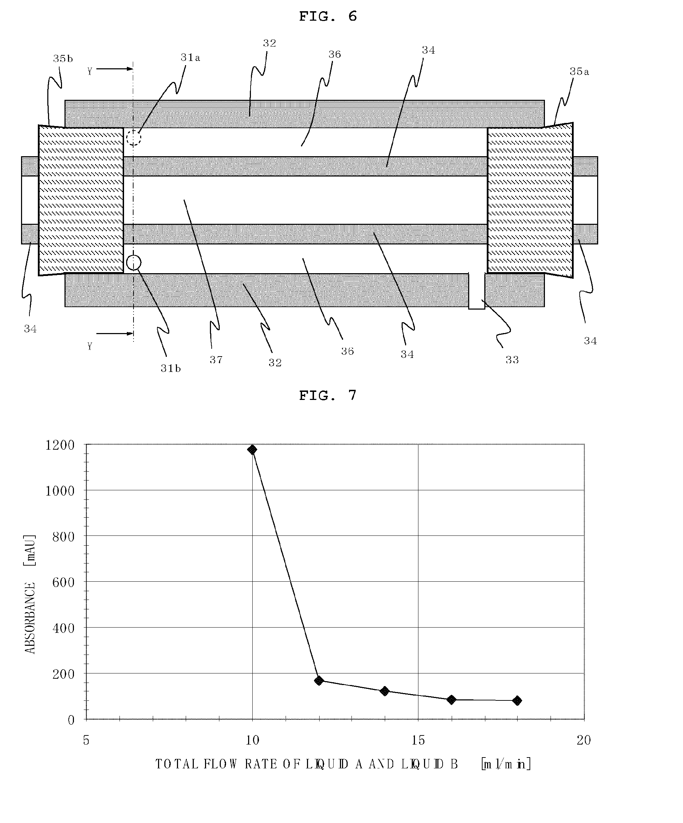

In this example, a reactor having a cross-sectional structure shown in Figs. 5 and 6 was used. Fig. 6 is a view on arrow X of the reactor. Fig. 5 is a view on arrow Y of the reactor. The reactor was composed of an outer tube 32 and an inner tube 34. The inner tube 34 passed through the lumen of the outer tube 32 to form an annular lumen 36 between the outer tube and the inner tube. Furthermore, inflow channels 31a and 31b for providing fluids to be used in a reaction and an outflow channel 33 communicated with the lumen 36. Two inner channels were connected to the left end of the outer tube as shown in Fig. 6 from the upper left and the lower right as shown in Fig. 5 in the direction tangential to the annular lumen. Note that in Fig. 6, the inflow channel 31a present on the opposite side of the cross-section is shown by a broken line for easy understanding of the positions of the inflow channels. The outflow channel 33 was connected to the right end of the outer tube. The outer tube had a length of 70 mm and an inner diameter of 4.0 mm; the inner tube had an outer diameter of 2.0 mm and an inner diameter of 1.0 mm; the annular lumen had an average thickness of 1.0 mm; the inflow channels each had an inner diameter of 0.5 mm; and the outflow channel had an inner diameter of 2.0 mm and a length of 50 mm. This reactor was produced by perforating a stainless steel square pole to form the lumen 36, the inflow channels 31a and 31b, and the outflow channel 33; inserting a stainless steel tube 34 into the lumen 36; and fixing both ends of the tubes with plugs 35a and 35b.

### (Evaluation of mixing ability)

The mixing ability was evaluated by an Ehrfeld method based on Villermaux/Dushman reaction (see Ehrfeld, W., et al., Ind. Eng. Chem. Res., 38, 1075-1082 (1999)). Liquid B of a HCl aqueous solution (0.137 mol/L) and Liquid A of a fluid mixture of KI (0. 016 mol/L), KIO₃ (0.0032 mol/L), and CH₃COONa (1.32 mol/L) were fed to the reactor having a cross-sectional structure shown in Figs. 5 and 6 from the inflow channel 31b and the inflow channel 31a, respectively, at a flow ratio of 1:1. The liquid discharged from the outflow channel 33 was subjected to measurement of UV absorbance by I₃⁻ (λ = 352 nm) to investigate the mixing ability of the reactor. The evaluation principle is as follows.

By mixing liquid A and liquid B, reactions represented by reaction formulae (1) to (3) proceed:

CH₃COO⁻ + H⁺ ← → CH₃COOH (1)

5I⁻ + IO₃⁻ + 6H⁺ ← → 3I₂ + 3 H₂O (2)

I₂ + I⁻ ← → I₃⁻ (3)

On this occasion, the higher the speed of mixing, the smaller the amounts of I₂ and I₃⁻ generated. Accordingly, a lower UV absorbance by I₃⁻ means better mixing. Fig. 7 and Tab. 1 show a relationship between the total flow rate of liquid A and liquid B and absorbance intensity (I₃⁻) at 352 nm.

[Tab. 1]

**Table 1**

| | | | | | | |
|---|---|---|---|---|---|---|
| A (salt) | mL/min | 5 | 6 | 7 | 8 | 9 |
| B (acid) | | 5 | 6 | 7 | 8 | 9 |
| Total flow rate | | 10 | 12 | 14 | 16 | 18 |
| Absorbance | mAU | 1176 | 168 | 120 | 85 | 80 |

The absorbance at a total flow rate of 10 mL/min was about 1100 mAU, which reveals that the reactor of the present invention has a sufficient mixing ability. In a total flow rate of 12 mL/min or more, the absorbance was not more than 200 mAU. It is confirmed that mixing is performed at high efficiency even at a high flow rate of 18 mL/min.

### REFERENCE SIGNS LIST

1a, 1b, 1a', 1b', 31a, 31b: inflow channel
2, 2', 32: outer tube (confluence portion and reaction portion)
3, 3', 33: outflow channel
4, 4', 34: inner tube
35a, 35b: plug
36: annular lumen
37: lumen of inner tube

## Claims

1. A tubular flow type reactor comprising:
inflow channels for respective inflow of at least two kinds of fluids to be used in a reaction;
an outer tube having a lumen that has an annular cross-section and is capable of merging the fluids and of distributing the merged fluids for the reaction; and
an outflow channel for outflow of a reaction product from the outer tube,
wherein the inflow channels are connected to the outer tube along the direction tangential to the internal circumference of the outer tube in such a manner that the lumens of the inflow channels communicate with the lumen of the outer tube.

2. A tubular flow type reactor comprising:
inflow channels for respective inflow of at least two kinds of fluids to be used in a reaction;
an outer tube having a lumen that is capable of merging the fluids and of distributing the merged fluids for the reaction;
an outflow channel for outflow of a reaction product from the outer tube; and
an inner tube disposed in the lumen of the outer tube and partitioning the lumen of the outer tube into an annular shape,
wherein the inflow channels are connected to the outer tube along the direction tangential to the internal circumference of the outer tube in such a manner that the lumens of the inflow channels communicate with the lumen of the outer tube.

3. The tubular flow type reactor according to Claim 2, wherein a coolant or a heat medium can be distributed in the inner tube.

4. The tubular flow type reactor according to any one of Claims 1 to 3, wherein the inflow channels are each connected to the outer tube so as to be almost orthogonal to the longitudinal direction of the outer tube.

5. The tubular flow type reactor according to any one of Claims 1 to 4, wherein the inflow channels are connected to the outer tube so as to be different from each other in the positions in the longitudinal direction of the outer tube.

6. A chemical reaction process using a tubular flow type reactor comprising an outer tube having a lumen having an annular cross-section, the process comprising the steps of:
letting at least two kinds of fluids to be used in a reaction flow into the outer tube from the direction tangential to the internal circumference of the outer tube in such a manner that a swirl flow is formed in the lumen of the outer tube;
reacting the fluids flowing in the outer tube in the longitudinal direction; and
letting a reaction product obtained in the previous step flow out from the outer tube.

7. A chemical reaction process using a tubular flow type reactor comprising an outer tube and an inner tube disposed in the lumen of the outer tube, the process comprising the steps of:
letting at least two kinds of fluids to be used in a reaction flow into the outer tube from the direction tangential to the internal circumference of the outer tube in such a manner that a flow swirling along the circumference of the outer tube is formed;
reacting the fluids flowing in the outer tube in the longitudinal direction; and
letting a reaction product obtained in the previous step flow out from the outer tube.

8. The chemical reaction process according to Claim 7, the process further comprising a step of distributing a coolant or a heat medium in the inner tube to perform heat exchange with the fluid flowing in the outer tube.

9. The chemical reaction process according to any one of Claims 6 to 8, wherein the at least two kinds of fluids to be used in a reaction flow into the outer tube at the one end of the outer tube in a direction almost orthogonal to the longitudinal direction of the outer tube.

10. The chemical reaction process according to any one of Claims 6 to 9, wherein the inflow channels are connected to the outer tube so as to be different from each other in the positions in the longitudinal direction of the outer tube.
